# EUROPEAN PATENT APPLICATION

(11) **EP 4 537 988 A1**
(43) Date of publication of application: **16.04.2025**
(21) Application number: 23819640.6
(22) Date of filing: 23.05.2023
(51) Int. Cl.: B25F 5/00, B25B 23/14, G05B 19/418

(54) **ELECTRIC POWER TOOL SYSTEM, CONTROL METHOD, AND PROGRAM**

(30) Priority: 08.06.2022 JP 2022093313
(71) Applicant: Panasonic Holdings Corporation, Osaka, 571-8501 (JP)
(72) Inventor: SHIMIZU, Hidenori, Kadoma-shi, Osaka 571-0057 (JP); NAKAMURA, Masamichi, Kadoma-shi, Osaka 571-0057 (JP); TANAKA, Naotake, Kadoma-shi, Osaka 571-0057 (JP)
(74) Representative: Müller-Boré & Partner Patentanwälte PartG mbB
(86) International application number: PCT/JP2023/019201
(87) International publication number: WO 2023/238656

(57) **Abstract**

The problem to be overcome by the present disclosure is to improve the efficiency of operations. An electric tool system (1) includes: an electric tool (2) for use to perform operations on a work target; and a management system (3) which communicates with the electric tool (2). The operations include a first operation and a second operation to be performed after the first operation has been done. The management system (3) transmits, after the electric tool (2) has had the first operation done, setting information about the second operation to the electric tool (2). The electric tool (2) transmits, after having received the setting information, operation results of the first operation to the management system (3).

## Description

### Technical Field

The present disclosure generally relates to an electric tool system, a control method, and a program. More particularly, the present disclosure relates to an electric tool system including an electric tool for use to perform operations on a work target, a control method, and a program.

### Background Art

Patent Literature 1 discloses an operations management system including an operations information acquisition unit, a location information acquisition unit, a work target information acquisition unit, and an information management unit. The operations information acquisition unit acquires, from a tool for use to perform operations on a work target, operations information about the specifics of the operations performed on the work target. The location information acquisition unit acquires location information of a place where the operations have been performed on the work target using the tool. The work target information acquisition unit acquires work target information for use to identify the work target based on the information read out from the work target. The information management unit makes a storage unit store the operations information, the location information, and the work target information in association with each other.

An operations management device which receives, from a tool for use to perform operations on a work target, operations information about the operations that have been done (see Patent Literature 1) has been known in the art. If an operations management system including such an operations management device is configured not to receive setting information about the next operations from the operations management device until the tool has transmitted the operations information to the operations management device, the next operations cannot be started until the results of the operations have been transmitted, thus possibly causing a decline in the efficiency of operations.

### Citation List

### Patent Literature

Patent Literature 1: JP 2016-91316 A

### Summary of Invention

In view of the foregoing background, it is therefore an object of the present disclosure to provide an electric tool system, a control method, and a program, all of which contribute to improving the efficiency of operations.

An electric tool system according to an aspect of the present disclosure includes: an electric tool for use to perform operations on a work target; and a management system configured to communicate with the electric tool. The operations include a first operation and a second operation to be performed after the first operation has been done. The management system transmits, after the electric tool has had the first operation done, setting information about the second operation to the electric tool. The electric tool transmits, after having received the setting information, operation results of the first operation to the management system.

A control method according to another aspect of the present disclosure is designed to control, in an electric tool system, an electric tool for use to perform operations on a work target. The electric tool system includes: the electric tool; and a management system configured to communicate with the electric tool. The operations include a first operation and a second operation to be performed after the first operation has been done. The control method includes a first operation performing step, a receiving step, and an operation results transmitting step. The first operation performing step includes performing the first operation. The receiving step includes receiving, after the first operation has been done, setting information about the second operation from the management system. The operation results transmitting step includes transmitting, after the setting information has been received, operation results of the first operation to the management system.

A program according to still another aspect of the present disclosure is designed to cause a computer system to perform the control method described above.

### Brief Description of Drawings

FIG. 1 schematically illustrates a system configuration for an electric tool system according to an exemplary embodiment of the present disclosure;
FIG. 2 is a sequence chart illustrating how the electric tool system operates;
FIG. 3 is a block diagram of the electric tool system; and
FIG. 4 is a schematic representation illustrating an exemplary electric tool for use in the electric tool system.

### Description of Embodiments

An electric tool system 1 according to an exemplary embodiment of the present disclosure will be described in detail with reference to the accompanying drawings. The drawings to be referred to in the following description of embodiments are all schematic representations. Thus, the ratio of the dimensions (including thicknesses) of respective constituent elements illustrated on the drawings does not always reflect their actual dimensional ratio. Note that the embodiment and its variations to be described below is only an exemplary one of various embodiments of the present disclosure and its variations and should not be construed as limiting. Rather, the exemplary embodiment and its variations may be readily modified in various manners depending on a design choice or any other factor without departing from the true spirit and scope of the present disclosure. Also, the embodiments to be described below (including its variations) may be adopted in combination as appropriate.

### (1) Overview

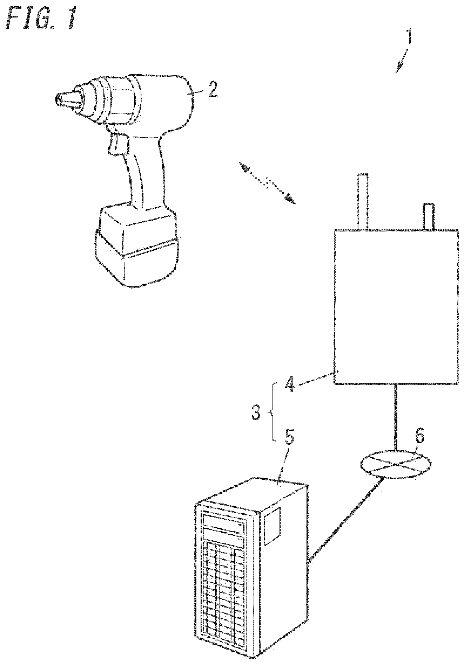

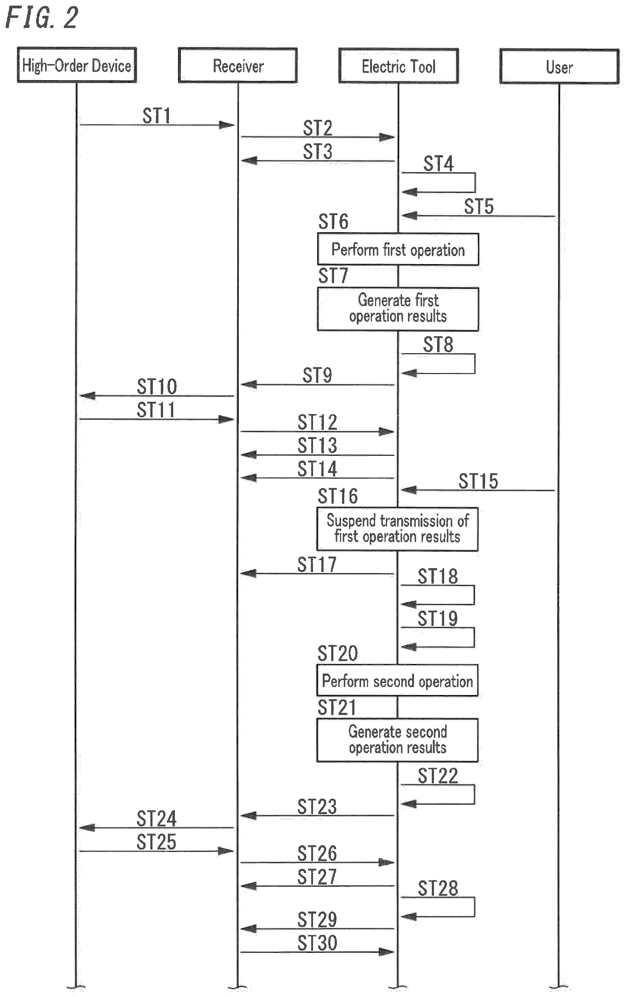

First, an overview of the electric tool system 1 according to this embodiment will be described with reference to FIGS. 1 and 2.

As shown in FIG. 1, the electric tool system 1 includes an electric tool 2 and a management system 3. In the following description of embodiments, the management system 3 includes a receiver 4 and a high-order device 5. Alternatively, the respective functions of the receiver 4 and the high-order device 5 may be aggregated together in a single housing.

The electric tool 2 is used to perform operations on a work target.

The management system 3 communicates with the electric tool 2.

The operations to be performed by the electric tool 2 include a first operation and a second operation to be performed after the first operation has been done as shown in FIG. 2.

The management system 3 transmits, after the electric tool 2 has had the first operation done, setting information about the second operation to the electric tool 2.

The electric tool 2 transmits, after having received the setting information about the second operation, operation results of the first operation to the management system 3.

As used herein, the electric tool 2 is a portable tool to be handled by the user who carries the electric tool 2 with him or her. Also, as used herein, the "operations" to be performed using the electric tool 2 refer to the operations of attaching a fastening member such as a screw or a bolt into a member to be fastened. In this case, the "work target" refers to the fastening member. Note that these are only examples of the "operations" to be performed using the electric tool 2 and its "work target" and should not be construed as limiting but may rather be changed as appropriate.

The "setting information" as used herein includes information about the specifics of the operations to be performed using the electric tool 2. If the operations to be performed using the electric tool 2 are operations of fastening a fastening member, then the setting information preferably includes information about fastening torque. In that case, the information about the fastening torque may be a preset value (torque value) of the fastening torque or the number of times impacting force is applied if the electric tool 2 is an impact tool.

In the electric tool system 1 according to this embodiment, the management system 3 transmits, after the electric tool 2 has had the first operation done, setting information about the second operation to the electric tool 2. The electric tool 2 transmits, after having received the setting information about the second operation, operation results of the first operation to the management system 3. That is to say, the electric tool system 1 gives higher priority to the reception of the setting information about the second operation to transmission of the operation results of the first operation. This allows, if the operation results of the first operation have so large a data size that it takes a rather long time to transmit the operation results, for example, the second operation to be started with the transmission of the operation results of the first operation suspended halfway while the operation results of the first operation is being transmitted, thus improving the efficiency of the operations to be performed using the electric tool 2.

### (2) Details

Next, the electric tool system 1 according to this embodiment will be described in further detail.

### (2.1) Configuration

A configuration for the electric tool system 1 will be described with reference to FIGS. 1, 3, and 4.

The electric tool system 1 according to this embodiment may be used, for example, on an assembly line for performing assembling operations of products at a factory. Note that the electric tool system 1 is not necessarily used on the assembly line at a factory but may also be used for any other purpose. For example, the electric tool system 1 may also be used to build a building at a construction site of building operations.

As shown in FIG. 1, the electric tool system 1 includes the electric tool 2 and the management system 3. The management system 3 includes the receiver 4 and the high-order device 5. In this embodiment, the receiver 4 and the high-order device 5 are connected together via a wired network 6 such as the Ethernet (R). Although only one electric tool 2 is illustrated in FIG. 1, the number of the electric tools 2 with which the single receiver 4 may communicate does not have to be one but may also be two or more and changed as appropriate. Likewise, although only one receiver 4 is illustrated in FIG. 1, a plurality of receivers 4 may be connected to the single high-order device 5 and the number of the receivers 4 provided may be changed as appropriate.

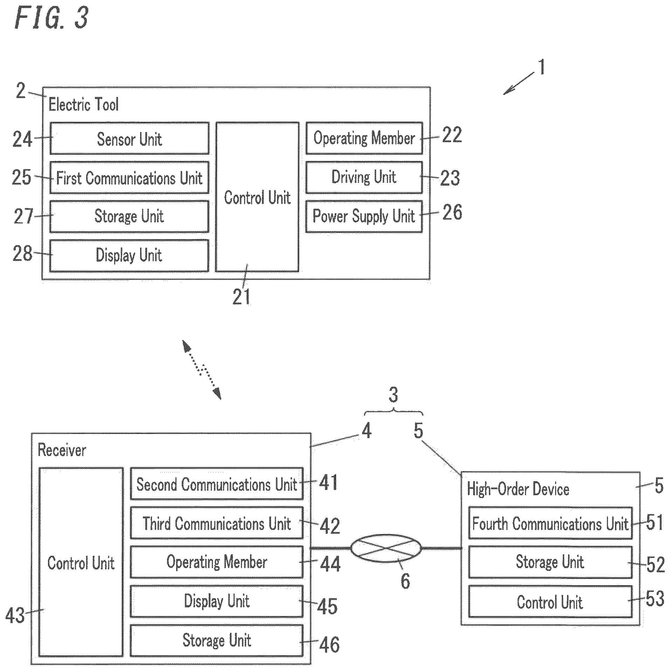

Next, the respective devices that form the electric tool system 1 will be described in further detail with reference to FIG. 3.

### (2.1.1) Electric tool

As shown in FIG. 3, the electric tool 2 includes a control unit 21, an operating member 22, a driving unit 23, a sensor unit 24, a first communications unit 25, a power supply unit 26, a storage unit 27, and a display unit 28.

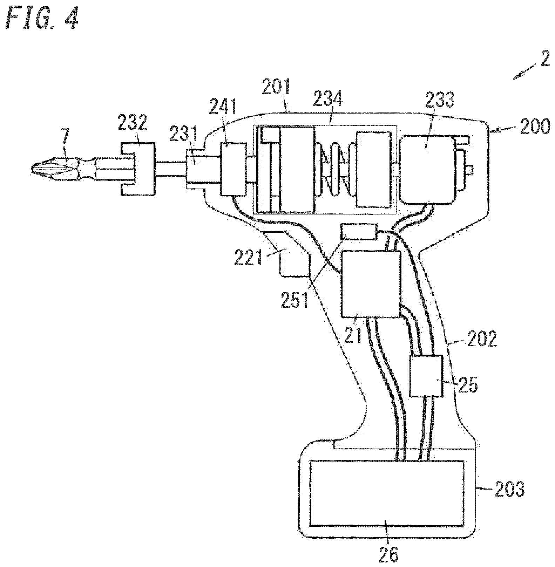

Also, as shown in FIG. 4, the electric tool 2 includes a body 200 in which respective components are housed or held. The body 200 includes a cylindrical barrel 201 and a grip 202 protruding radially from a circumferential surface of the barrel 201. An output shaft 231 protrudes from one axial end of the barrel 201. The output shaft 231 is provided with a socket 232, to which a tip tool 7 (such as a screwdriver bit) is attached removably and selectively according to the type of the fastening member as the work target. To one end (lower end in FIG. 4) of the grip 202, a battery pack 203, housing the power supply unit 26 in a resin case, is attached removably.

The control unit 21 controls the operation of the driving unit 23, the sensor unit 24, the first communications unit 25, and other components. The control unit 21 is implemented as a computer system including one or more processors and a memory. The computer system performs the functions of the control unit 21 by making the one or more processors execute a program stored in the memory. In this embodiment, the program is stored in advance in the memory of the control unit 21. Alternatively, the program may also be downloaded via a telecommunications line such as the Internet or distributed after having been stored in a non-transitory storage medium such as a memory card. The control unit 21 may be implemented as, for example, a field-programmable gate array (FPGA) or an application specific integrated circuit (ASIC). A microcontroller (such as a circuit board) performing the functions of the control unit 21 may be housed inside the grip 202, for example.

The operating member 22 includes a trigger switch 221 provided for the grip 202 (refer to FIG. 4). The trigger switch 221 accepts an operating command entered to activate the driving unit 23. Specifically, when the trigger switch 221 is pulled by the user, for example, an input signal, of which the magnitude is proportional to the manipulative variable of the trigger switch 221 (i.e., the depth to which the trigger switch 221 has been pulled), is supplied to the control unit 21. The control unit 21 controls activation or deactivation of the driving unit 23 in accordance with the input signal supplied from the operating member 22. Specifically, the control unit 21 adjusts the velocity of a motor 233 by controlling the driving unit 23 such that the motor 233 rotates at a velocity corresponding to the input signal supplied from the operating member 22.

The driving unit 23 includes not only the motor 233 but also a driver circuit (not shown), an impact mechanism 234, and the output shaft 231. The driving unit 23 drives a tip tool 7 for use to perform operations on a work target which may be, for example, a fastening member such as a screw or a bolt. Specifically, the driver circuit controls the rotation of the motor 233 in accordance with a control signal supplied from the control unit 21. The rotational force of the motor 233 is transmitted, via the impact mechanism 234, to the output shaft 231 and to the tip tool 7 attached to the output shaft 231 via the socket 232. If the output torque is equal to or less than a predetermined level, the impact mechanism 234 reduces the rotational velocity of the output shaft of the motor 233 and transmits reduced rotational force with the reduced rotational velocity to the output shaft 231 and the tip tool 7. The impact mechanism 234 is configured to, when the output torque exceeds the predetermined level, apply impacting force to the output shaft 231 and the tip tool 7 to turn the fastening member as the work target. As shown in FIG. 4, the motor 233 and the impact mechanism 234 are housed inside the barrel 201. Note that the driving unit 23 does not have to include the impact mechanism 234. Alternatively, the driving unit 23 may include only a speed reducer mechanism (such as a planetary gear mechanism) for reducing the rotational velocity of the output shaft of the motor 233 and transmitting the rotational force with the reduce rotational velocity to the output shaft 231 and the tip tool 7. That is to say, the electric tool 2 is not limited to an impact tool but may also be a rotary tool such as a screwdriver or a drill-screwdriver.

The sensor unit 24 measures the fastening torque applied by the driving unit 23. The sensor unit 24 may include, for example, a torque sensor (such as magnetostrictive torque sensor 241) attached to the output shaft 231. The magnetostrictive torque sensor 241 makes a coil, which is disposed in a non-rotating part, detect a variation in magnetic permeability responsive to the strain caused upon the application of torque to the output shaft of the motor 233 and outputs a voltage signal proportional to the strain. In this manner, the sensor unit 24 measures the torque applied to the output shaft 231. That is to say, the sensor unit 24 measures the torque (fastening torque) applied by the electric tool 2 to the work target. The sensor unit 24 outputs the torque (fastening torque) thus measured to the control unit 21. Note that the sensor unit 24 does not have to include the torque sensor 241 but may transform a variation in the number of revolutions of the output shaft of the motor 233 which has been detected by a rotation sensor into a fastening torque value.

The control unit 21 controls the driving unit 23 such that the fastening torque comes to have a preset torque value to be set in accordance with the setting information. When finding that the fastening torque measured by the torque sensor 241 has reached the preset torque value, for example, the control unit 21 stops running the motor 233. Note that the preset torque value is changeable and may be changed by the control unit 21 in accordance with the setting information transmitted from the receiver 4 to the electric tool 2.

The operation mode of the driving unit 23 includes: a driving disabled mode in which the driving unit 23 is disabled to be driven; and a driving enabled mode in which the driving unit 23 is enabled to be driven. The control unit 21 switches the operation mode of the driving unit 23 between the driving disabled mode and the driving enabled mode. As used herein, to "arrest driving" means not allowing the driving unit 23 to be driven. If the operation mode of the driving unit 23 is the driving disabled mode, then the control unit 21 does not allow the driving unit 23 to be driven even if the trigger switch 221 of the operating member 22 is operated by the user.

The first communications unit 25 is a communications module for establishing short-range wireless communication compliant with the Wi-Fi (R) protocol, for example. The first communications unit 25 may communicate wirelessly with the receiver 4 in accordance with this type of communications protocol. Alternatively, the wireless communication between the first communications unit 25 and the receiver 4 may also be a wireless communication that uses radio waves as a transmission medium and is compliant with a communications protocol such as the Specified Low Power Radio Station (radio station that requires no licenses) on the 920 MHz band or Bluetooth (R) protocol. Still alternatively, the first communications unit 25 may also be a communications module for establishing a wired communication via a communications line. In that case, the first communications unit 25 establishes a wired communication with the receiver 4 via a wired network such as the Ethernet.

For example, the first communications unit 25 may be housed inside the grip 202 and an antenna 251 of the first communications unit 25 may be housed inside the barrel 201.

The power supply unit 26 includes a storage battery. The power supply unit 26 is housed inside the battery pack 203. The battery pack 203 is configured to house the power supply unit 26 inside a resin case. The storage battery of the power supply unit 26 may be charged by removing the battery pack 203 from the grip 202 and connecting the battery pack 203 thus removed to a charger. The power supply unit 26 supplies power required to operate an electric circuit including the control unit 21 and the motor 233 with the electricity stored in the storage battery.

Examples of the storage unit 27 include a read-only memory (ROM), a random-access memory (RAM), and a nonvolatile memory. Examples of the nonvolatile memory include an electrically erasable programmable read-only memory (EEPROM) and a flash memory. The storage unit 27 stores a control program to be executed by the control unit 21. In addition, the storage unit 27 also stores the setting information received from the management system 3 and operations information about the operations that have been done in accordance with the setting information. The operations information may be, for example, information indicating that the operations have been done or information about the results of the operations that have been done. If the operations to be performed are the operations of fastening a fastening member, then information about the results of the operations that have been performed preferably includes, for example, information such as a value of the fastening torque measured by the sensor unit 24. The storage unit 27 further stores identification information assigned to the respective electric tools 2 and information (tool model information) about the models of the respective electric tools 2 (e.g., information about the manufacturer, the product number assigned by the manufacturer, and other attributes). In this case, the identification information preferably includes IP addresses assigned to the respective electric tools 2, for example.

The display unit 28 includes, for example, a two-digit seven-segment light-emitting diode (LED) which is provided to be exposed on the surface of the body 200. The display unit 28 also includes, for example, a blue LED and a red LED, which are provided to be exposed on the surface of the body 200.

### (2.1.2) Receiver

As shown in FIG. 3, the receiver 4 includes a second communications unit 41, a third communications unit 42, a control unit 43, an operating member 44, a display unit 45, and a storage unit 46.

The control unit 43 controls the operation of the second communications unit 41, the third communications unit 42, the display unit 45, and other components. The control unit 43 is implemented as a computer system including one or more processors and a memory. The computer system performs the functions of the control unit 43 by making the one or more processors execute a program stored in the memory. In this embodiment, the program is stored in advance in the memory of the control unit 43. Alternatively, the program may also be downloaded via a telecommunications line such as the Internet or distributed after having been stored in a non-transitory storage medium such as a memory card. The control unit 43 may be implemented as, for example, an FPGA or an ASIC.

The second communications unit 41 is a communications module for establishing a short-range wireless communication compliant with the same communications protocol (such as the Wi-Fi (R) protocol) as the first communications unit 25 of the electric tool 2, for example. The second communications unit 41 communicates wirelessly with the first communications unit 25 of the electric tool 2.

The third communications unit 42 is a communications module for establishing a wired communication via a communications line. The third communications unit 42 communicates with a fourth communications unit 51 of the high-order device 5 via a wired network 6 such as the Ethernet.

The operating member 44 includes, for example, an operating switch that accepts the user's operating command.

The display unit 45 includes, for example, a plurality of light-emitting diodes (LEDs) and indicates the operating status of the receiver 4 by turning ON or OFF or flashing the LEDs. Optionally, the display unit 45 may include a display device such as a liquid crystal display.

Examples of the storage unit 46 include a ROM, a RAM, and a nonvolatile memory (such as an EEPROM or a flash memory). The storage unit 46 stores the setting information to be transmitted to each electric tool 2, the operation results received from the electric tool 2, and other pieces of information in association with the identification information of the electric tool 2. This allows the storage unit 46 to store, with respect to each of a plurality of electric tools 2, the setting information to be transmitted to the electric tool 2 and the operation results received from the electric tool 2. In addition, the storage unit 46 also stores other pieces of information including the identification information assigned to each receiver 4 and information about the model of the receiver 4 (e.g., information about the manufacturer, the product number assigned by the manufacturer, and other attributes). In this case, the identification information includes an IP address assigned to the receiver 4, for example.

### (2.1.3) High-order device

The high-order device 5 may be a server, for example. The high-order device 5 includes the fourth communications unit 51, a storage unit 52, and a control unit 53.

The fourth communications unit 51 is a communications module for establishing a wired communication via a communications line. The fourth communications unit 51 communicates with the third communications unit 42 of the receiver 4 via the wired network 6 such as the Ethernet.

Examples of the storage unit 52 include a ROM, a RAM, and a nonvolatile memory (such as an EEPROM or a flash memory). The storage unit 52 stores, with respect to each of the plurality of electric tools 2, the setting information about the operations to be performed using the electric tool 2, the history of the operation results about the operations that have been performed using the electric tool 2, and other pieces of information in association with the identification information of the electric tool 2.

The control unit 53 controls the operation of the fourth communications unit 51 and other components. The control unit 53 is implemented as a computer system including one or more processors and a memory. The computer system performs the functions of the control unit 53 by making the one or more processors execute a program stored in the memory. In this embodiment, the program is stored in advance in the memory of the control unit 53. Alternatively, the program may also be downloaded via a telecommunications line such as the Internet or distributed after having been stored in a non-transitory storage medium such as a memory card. The control unit 53 may be implemented as, for example, an FPGA or an ASIC.

The control unit 53 makes the fourth communications unit 51 transmit setting information about the operations to be performed by the electric tool 2 to the receiver 4.

In addition, the control unit 53 also makes the storage unit 52 store the history of the operation results, received by the fourth communications unit 51 from the receiver 4, of the operations that have been performed by the electric tool 2.

### (2.2) Description of operation

Next, it will be described with reference to FIG. 2 and other drawings how the electric tool system 1 operates.

FIG. 2 is a sequence chart showing the procedure of a series of operations to be performed by the user using the electric tool 2. The series of operations includes a first operation, a second operation to be performed after the first operation has been done, and a third operation to be performed after the second operation has been done. Note that the sequence chart shown in FIG. 2 shows only an exemplary procedure of operation of the electric tool system 1 according to this embodiment and should not be construed as limiting. Optionally, the processing steps shown in FIG. 2 may be performed in a different order from the illustrated one, some of the processing steps shown in FIG. 2 may be omitted as appropriate, and/or an additional processing step may be performed as needed.

Suppose a first piece of setting information, a second piece of setting information, and a third piece of setting information, which are respective pieces of information about the specifics of the first operation, the second operation, and the third operation to be performed using the electric tool 2, are stored in the storage unit 52 of the high-order device 5. Also, it will be described how the electric tool system 1 operates on the supposition that in an initial state where the fastening operation using the electric tool 2 has been started, a wireless communication is ready to be established between the receiver 4 and the electric tool 2. In addition, in the initial state, the operation mode of the driving unit 23 is supposed to be a driving disabled mode in which driving is disabled.

To have the first operation started to be performed using the electric tool 2, the control unit 53 of the high-order device 5 reads out the first piece of setting information from the storage unit 52. Then, the control unit 53 makes the fourth communications unit 51 transmit the first piece of setting information to the third communications unit 42 of the receiver 4 (in Step ST1).

When the third communications unit 42 has received the first piece of setting information completely, the control unit 43 of the receiver 4 will make the second communications unit 41 transmit the first piece of setting information to the first communications unit 25 of the electric tool 2 (in Step ST2).

When the first communications unit 25 has received the first piece of setting information completely, the control unit 21 of the electric tool 2 will make the first communications unit 25 transmit a response signal to the receiver 4 as the source (in Step ST3) to have the first piece of setting information stored in a nonvolatile memory included in the storage unit 27.

In addition, when the first communications unit 25 has received the first piece of setting information completely, the control unit 21 will also switch the operation mode of the driving unit 23 from the driving disabled mode to the driving enabled mode (in Step ST4). At this time, the control unit 21 may make the display unit 28 indicate that the driving unit 23 has been switched to the driving enabled mode.

In a state where the first piece of setting information is stored in the storage unit 27 of the electric tool 2 and the operation mode of the driving unit 23 is the driving enabled mode, the first operation using the electric tool 2 is allowed to be performed. Specifically, when the user operates the operating member 22 of the electric tool 2 (in Step ST5), the control unit 21 of the electric tool 2 controls the driving unit 23 to make the driving unit 23 perform the operations of fastening a fastening member with the fastening torque defined by the first piece of setting information, thus having the first operation performed (in Step ST6). At this time, the sensor unit 24 measures the fastening torque of the fastening member. The control unit 21 generates operation results of the first operation (hereinafter simply referred to as "first operation results") including a measured value of the fastening torque after the first operation has been done (in Step ST7). In this processing step, the first operation results generated by the control unit 21 are temporarily stored in a memory included in the control unit 21.

After the first operation has been done, the control unit 21 switches the operation mode of the driving unit 23 from the driving enabled mode to the driving disabled mode (in Step ST8).

In addition, after the first operation has been done, the control unit 21 makes the first communications unit 25 transmit a signal as a notification that the first operation has been done (hereinafter simply referred to as an "end-of-first-operation notification signal") to the second communications unit 41 of the receiver 4 (in Step ST9).

When the second communications unit 41 receives the end-of-first-operation notification signal, the control unit 43 of the receiver 4 makes the third communications unit 42 transmit the end-of-first-operation notification signal to the fourth communications unit 51 of the high-order device 5 (in Step ST10).

When the fourth communications unit 51 receives the end-of-first-operation notification signal, the control unit 53 of the high-order device 5 reads out a second piece of setting information from the storage unit 52 to have a second operation started using the electric tool 2. Then, the control unit 53 makes the fourth communications unit 51 transmit the second piece of setting information to the third communications unit 42 of the receiver 4 (in Step ST11).

When the third communications unit 42 has received the second piece of setting information completely, the control unit 43 of the receiver 4 will make the second communications unit 41 start transmitting the second piece of setting information to the first communications unit 25 of the electric tool 2 (in Step ST12).

In this case, the operation mode of the driving unit 23 is the driving disabled mode while the second piece of setting information is being received. Thus, if the operating member 22 is operated while the second piece of setting information is being received, the control unit 21 arrests the activation of the driving unit 23. After the second piece of setting information has been received completely, the control unit 21 will switch the operation mode of the driving unit 23 to the driving enabled mode.

Next, it will be described how the electric tool system 1 operates after the second piece of setting information has been received completely.

When the first communications unit 25 has received the second piece of setting information completely, the control unit 21 of the electric tool 2 will make the first communications unit 25 transmit a response signal to the receiver 4 as the source (in Step ST13) to have the second piece of setting information stored in the nonvolatile memory included in the storage unit 27.

After the response signal has been transmitted from the first communications unit 25 to the receiver 4, the control unit 21 makes the first communications unit 25 start transmitting the first operation results to the receiver 4 (in Step ST14).

In this case, if the user operates the operating member 22 of the electric tool 2 to start performing the second operation while the first operation results are being transmitted, the control unit 21 of the electric tool 2 suspends the transmission of the first operation results to activate the driving unit 23. Also, if the driving unit 23 is inactive after the second operation has been done, the control unit 21 resumes transmitting the first operation results to the receiver 4. Specifically, if the user operates the operating member 22 of the electric tool 2 to start performing the second operation while the first operation results are being transmitted (in Step ST15), the control unit 21 suspends the transmission of the first operation results (in Step ST16), and transmits a request signal to the receiver 4 to request the receiver 4 to discard the data included in the first operation results received by the receiver 4 (in Step ST17). In addition, when suspending the transmission of the first operation results, the control unit 21 makes the storage unit 27 store every data included in the first operation results (in Step ST18).

When every data included in the first operation results is stored in the storage unit 27, the control unit 21 will switch the operation mode of the driving unit 23 from the driving disabled mode to the driving enabled mode (in Step ST19).

When switching the operation mode of the driving unit 23 to the driving enabled mode, the control unit 21 controls the driving unit 23 to make the driving unit 23 perform the operations of fastening the fastening member with the fastening torque defined by the second piece of setting information to have the second operation performed (in Step ST20). At this time, the sensor unit 24 measures the fastening torque of the fastening member. After the second operation has been done, the control unit 21 will generate operation results of the second operation (hereinafter simply referred to as "second operation results") including the measured value of the fastening torque (in Step ST21). In this case, the second operation results generated by the control unit 21 are temporarily stored in a memory included in the control unit 21.

After the second operation has been done, the control unit 21 switches the operation mode of the driving unit 23 from the driving enabled mode to the driving disabled mode (in Step ST22).

In addition, after the second operation has been done, the control unit 21 makes the first communications unit 25 transmit a signal as a notification that the second operation has been done (hereinafter referred to as an "end-of-second-operation notification signal") to the second communications unit 41 of the receiver 4 (in Step ST23).

When the second communications unit 41 receives the end-of-second-operation notification signal, the control unit 43 of the receiver 4 makes the third communications unit 42 transmit the end-of-second-operation notification signal to the fourth communications unit 51 of the high-order device 5 (in Step ST24).

When the fourth communications unit 51 receives the end-of-second-operation notification signal, the control unit 53 of the high-order device 5 reads out a third piece of setting information from the storage unit 52 to have a third operation using the electric tool 2 started. Then, the control unit 53 makes the fourth communications unit 51 transmit the third piece of setting information to the third communications unit 42 of the receiver 4 (in Step ST25).

When the third communications unit 42 has received the third piece of setting information completely, the control unit 43 of the receiver 4 will make the second communications unit 41 start transmitting the third piece of setting information to the first communications unit 25 of the electric tool 2 (in Step ST26).

When the first communications unit 25 has received the third piece of setting information completely, the control unit 21 of the electric tool 2 will make the first communications unit 25 transmit a response signal to the receiver 4 as the source (in Step ST27) to have the third piece of setting information stored in the nonvolatile memory included in the storage unit 27.

If the driving unit 23 is inactive after the response signal has been transmitted from the first communications unit 25 to the receiver 4, then the control unit 21 reads out every data included in the first operation results from the storage unit 27 (in Step ST28) to make the first communications unit 25 start transmitting every data included in the first operation results to the receiver 4 (in Step ST29). In this case, the control unit 21 has every data included in the first operation results and then the second operation results transmitted to the receiver 4.

When the second communications unit 41 has received the first operation results and the second operation results completely, the control unit 43 will make the second communications unit 41 transmit, to the electric tool 2, a response signal indicating that the operation results have been received (in Step ST30). Note that if the user operates the operating member 22 of the electric tool 2 to start performing the third operation while the first operation results and the second operation results are being transmitted, then the control unit 21 suspends the transmission of the first operation results and the second operation results to activate the driving unit 23.

As can be seen from the foregoing description, the electric tool system 1 according to this embodiment may perform the second operation while suspending the transmission of the results of the first operation that has already been done. This enables, when the first operation results have so large a data size that it is expected to take a long time to have the first operation results transmitted, performing the second operation without waiting for the first operation results to be transmitted completely, thus improving the efficiency of operations to be performed using the electric tool 2.

### (3) Variations

Note that the embodiment described above is only an exemplary one of various embodiments of the present disclosure and should not be construed as limiting. Rather, the exemplary embodiment may be readily modified in various manners depending on a design choice or any other factor without departing from the scope of the present disclosure. Also, the functions of the electric tool system 1 may also be implemented as a control method, a (computer) program, or a non-transitory storage medium on which the program is stored.

A control method according to the exemplary embodiment described above is designed to control, in an electric tool system 1, an electric tool 2 for use to perform operations on a work target. The electric tool system 1 includes: the electric tool 2; and a management system 3 configured to communicate with the electric tool 2. The operations to be performed using the electric tool 2 include a first operation and a second operation to be performed after the first operation has been done. The control method for controlling the electric tool system 1 includes a first operation performing step, a receiving step, and an operation results transmitting step. The first operation performing step includes performing the first operation. The receiving step includes receiving, after the first operation has been done, setting information about the second operation from the management system 3. The operation results transmitting step includes transmitting, after the setting information has been received, operation results of the first operation to the management system 3. Also, a (computer) program according to the exemplary embodiment described above is designed to cause a computer system to perform the control method described above.

Next, variations of the exemplary embodiment will be enumerated one after another. Note that the variations to be described below may be adopted in combination as appropriate.

If the user operates the operating member 22 of the electric tool 2 to start performing the second operation while the first operation results are being transmitted, then the control unit 21 of the electric tool 2 suspends the transmission of the first operation results to activate the driving unit 23. If the driving unit 23 is inactive after the transmission of the first operation results has been suspended and after the second operation has been done, the control unit 21 may resume transmitting, to the receiver 4, the data included in the first operation results which has not been transmitted to the receiver 4 yet. In that case, if the user operates the operating member 22 of the electric tool 2 to start performing the second operation while the first operation results are being transmitted, then the control unit 21 suspends the transmission of the first operation results to make the storage unit 27 store the data included in the first operation results which has not been transmitted to the receiver 4 yet. This allows the storage space left in the storage unit 27 to be saved. In addition, this also allows the first operation results to be transmitted in a shorter time after the second operation has been done.

Optionally, the first, second, and third pieces of setting information may be stored in the storage unit 46 of the receiver 4 before the first operation starts to be performed. In that case, each of the first, second, and third pieces of setting information may be transmitted from the receiver 4 to the electric tool 2 before each of the first, second, and third operations starts to be performed. In such a situation, each of the first, second, and third pieces of setting information may be a piece of information that has been entered using the operating member 44 of the receiver 4 or a piece of information received from the high-order device 5, whichever is appropriate.

The electric tool system 1 according to the present disclosure or the agent that performs the control method according to the present disclosure includes a computer system. The computer system may include a processor and a memory as principal hardware components thereof. The computer system performs the functions of the electric tool system 1 according to the present disclosure or serves as the agent that performs the control method according to the present disclosure by making the processor execute a program stored in the memory of the computer system. The program may be stored in advance in the memory of the computer system. Alternatively, the program may also be downloaded through a telecommunications line or be distributed after having been stored in some non-transitory storage medium such as a memory card, an optical disc, or a hard disk drive, any of which is readable for the computer system. The processor of the computer system may be made up of a single or a plurality of electronic circuits including a semiconductor integrated circuit (IC) or a large-scale integrated circuit (LSI). As used herein, the "integrated circuit" such as an IC or an LSI is called by a different name depending on the degree of integration thereof. Examples of the integrated circuits such as an IC or an LSI include integrated circuits called a "system LSI," a "very-large-scale integrated circuit (VLSI)," and an "ultra-large-scale integrated circuit (ULSI)." Optionally, a field-programmable gate array (FPGA) to be programmed after an LSI has been fabricated or a reconfigurable logic device allowing the connections or circuit sections inside of an LSI to be reconfigured may also be adopted as the processor. Those electronic circuits may be either integrated together on a single chip or distributed on multiple chips, whichever is appropriate. Those multiple chips may be aggregated together in a single device or distributed in multiple devices without limitation. As used herein, the "computer system" includes a microcontroller including one or more processors and one or more memories. Thus, the microcontroller may also be implemented as a single or a plurality of electronic circuits including a semiconductor integrated circuit or a large-scale integrated circuit.

In the exemplary embodiment described above, the functions of the management system 3 are distributed in the receiver 4 and the management device 5. Alternatively, the functions of the receiver 4 and the management device 5 may be aggregated together in a single housing.

### (4) Recapitulation

As can be seen from the foregoing description, an electric tool system (1) according to a first aspect includes: an electric tool (2) for use to perform operations on a work target; and a management system (3) configured to communicate with the electric tool (2). The operations include a first operation and a second operation to be performed after the first operation has been done. The management system (3) transmits, after the electric tool (2) has had the first operation done, setting information about the second operation to the electric tool (2). The electric tool (2) transmits, after having received the setting information, operation results of the first operation to the management system (3).

This aspect allows the second operation to be started while the operation results of the first operation are being transmitted, thus improving the efficiency of operations to be performed using the electric tool (2).

In an electric tool system (1) according to a second aspect, which may be implemented in conjunction with the first aspect, the electric tool (2) transmits an operation completion signal to the management system (3) after having had the first operation done. The management system (3) transmits the setting information to the electric tool (2) after having received the operation completion signal.

This aspect allows the management system (3) to determine whether the first operation has been done or not.

In an electric tool system (1) according to a third aspect, which may be implemented in conjunction with the first or second aspect, the electric tool (2) includes a driving unit (23), an operating member (22), and a control unit (21). The driving unit (23) drives a tip tool (7) for use to perform the operations. The operating member (22) accepts an operating command entered to activate the driving unit (23). The control unit (21) controls activation or deactivation of the driving unit (23) in accordance with an input signal supplied from the operating member (22). The control unit (21) suspends, when the operating member (22) is operated while the operation results are being transmitted, transmission of the operation results to activate the driving unit (23).

This aspect allows the second operation to be started with the transmission of the operation results of the first operation suspended, thus improving the efficiency of operations to be performed using the electric tool (2).

In an electric tool system (1) according to a fourth aspect, which may be implemented in conjunction with the third aspect, the control unit (21) resumes, when the driving unit (23) is inactive after the second operation has been done, transmitting every data, included in the operation results, to the management system (3).

This aspect may reduce the chances of any part of the data included in the operation results failing to be transmitted to the management system (3).

In an electric tool system (1) according to a fifth aspect, which may be implemented in conjunction with the fourth aspect, the electric tool (2) further includes a storage unit (27). The control unit (21) transmits, when having suspended the transmission of the operation results, request information to the management system (3) to request the management system (3) to discard data included in the operation results received by the management system (3). The storage unit (27) stores, when the transmission of the operation results has been suspended, every data included in the operation results.

This aspect may reduce the chances of part of the data included in the operation results to be transmitted to the management system (3) duplicating before and after the transmission is suspended.

**In** an electric tool system (1) according to a sixth aspect, which may be implemented in conjunction with any one of the third to fifth aspects, the control unit (21) resumes, when the driving unit (23) is inactive after the second operation has been done, transmitting, to the management system (3), data included in the operation results which has not been transmitted to the management system (3) yet.

This aspect allows the operation results to be transmitted in a shorter time after the transmission of the operation results has been resumed.

In an electric tool system (1) according to a seventh aspect, which may be implemented in conjunction with the sixth aspect, the electric tool (2) further includes a storage unit (27). The storage unit (27) stores, when the transmission of the operation results has been suspended, the data included in the operation results which has not been transmitted to the management system (3) yet.

This aspect allows the storage space left in the storage unit (27) to be saved.

In an electric tool system (1) according to an eighth aspect, which may be implemented in conjunction with any one of the first to seventh aspects, the electric tool (2) includes a driving unit (23), an operating member (22), and a control unit (21). The driving unit (23) drives a tip tool (7) for use to perform the operations. The operating member (22) accepts an operating command entered to activate the driving unit (23). The control unit (21) controls activation or deactivation of the driving unit (23) in accordance with an input signal supplied from the operating member (22). The control unit (21) arrests, when the operating member (22) is operated while at least the setting information is being received, the activation of the driving unit (23).

This aspect may reduce the chances of operations being performed while the setting information is being received.

In an electric tool system (1) according to a ninth aspect, which may be implemented in conjunction with the eighth aspect, an operation mode of the driving unit (23) includes: a driving disabled mode in which the driving unit (23) is disabled to be driven; and a driving enabled mode in which the driving unit (23) is enabled to be driven. The control unit (21) switches the operation mode of the driving unit (23) to the driving disabled mode after the first operation has been done and switches the operation mode of the driving unit (23) to the driving enabled mode after the setting information has been received.

This aspect may reduce the chances of operations being performed while the setting information is being received.

A control method according to a tenth aspect is designed to control, in an electric tool system (1), an electric tool (2) for use to perform operations on a work target. The electric tool system (1) includes: the electric tool (2); and a management system (3) configured to communicate with the electric tool (2). The operations include a first operation and a second operation to be performed after the first operation has been done. The control method includes a first operation performing step, a receiving step, and an operation results transmitting step. The first operation performing step includes performing the first operation. The receiving step includes receiving, after the first operation has been done, setting information about the second operation from the management system (3). The operation results transmitting step includes transmitting, after the setting information has been received, operation results of the first operation to the management system (3).

This aspect allows the second operation to be started while the operation results of the first operation are being transmitted, thus improving the efficiency of operations to be performed using the electric tool (2).

A program according to an eleventh aspect is designed to cause a computer system to perform the control method according to the tenth aspect.

This aspect allows the second operation to be started while the operation results of the first operation are being transmitted, thus improving the efficiency of operations to be performed using the electric tool (2).

Note that the constituent elements according to the second to ninth aspects are not essential constituent elements for the electric tool system (1) but may be omitted as appropriate.

### Reference Signs List

- 1: Electric Tool System
- 2: Electric Tool
- 3: Management System
- 7: Tip Tool
- 21: Control Unit
- 22: Operating Member
- 23: Driving Unit
- 27: Storage Unit

## Claims

1. An electric tool system comprising:
an electric tool for use to perform operations on a work target; and
a management system configured to communicate with the electric tool,
the operations including a first operation and a second operation to be performed after the first operation has been done,
the management system being configured to transmit, after the electric tool has had the first operation done, setting information about the second operation to the electric tool,
the electric tool being configured to transmit, after having received the setting information, operation results of the first operation to the management system.

2. The electric tool system of claim 1, wherein
the electric tool is configured to transmit an operation completion signal to the management system after having had the first operation done, and
the management system is configured to transmit the setting information to the electric tool after having received the operation completion signal.

3. The electric tool system of claim 1 or 2, wherein
the electric tool includes:
a driving unit configured to drive a tip tool for use to perform the operations;
an operating member configured to accept an operating command entered to activate the driving unit; and
a control unit configured to control activation or deactivation of the driving unit in accordance with an input signal supplied from the operating member,
the control unit being configured to, when the operating member is operated while the operation results are being transmitted, suspend transmission of the operation results to activate the driving unit.

4. The electric tool system of claim 3, wherein
the control unit is configured to, when the driving unit is inactive after the second operation has been done, resume transmitting every data, included in the operation results, to the management system.

5. The electric tool system of claim 4, wherein
the electric tool further includes a storage unit,
the control unit is configured to, when having suspended the transmission of the operation results, transmit request information to the management system to request the management system to discard data included in the operation results received by the management system, and
the storage unit is configured to, when the transmission of the operation results has been suspended, store every data included in the operation results.

6. The electric tool system of any one of claims 3 to 5, wherein
the control unit is configured to, when the driving unit is inactive after the second operation has been done, resume transmitting, to the management system, data included in the operation results which has not been transmitted to the management system yet.

7. The electric tool system of claim 6, wherein
the electric tool further includes a storage unit, and
the storage unit is configured to, when the transmission of the operation results has been suspended, store the data included in the operation results which has not been transmitted to the management system yet.

8. The electric tool system of any one of claims 1 to 7, wherein
the electric tool includes:
a driving unit configured to drive a tip tool for use to perform the operations;
an operating member configured to accept an operating command entered to activate the driving unit; and
a control unit configured to control activation or deactivation of the driving unit in accordance with an input signal supplied from the operating member,
the control unit being configured to, when the operating member is operated while at least the setting information is being received, arrest the activation of the driving unit.

9. The electric tool system of claim 8, wherein
an operation mode of the driving unit includes: a driving disabled mode in which the driving unit is disabled to be driven; and a driving enabled mode in which the driving unit is enabled to be driven, and
the control unit is configured to switch the operation mode of the driving unit to the driving disabled mode after the first operation has been done and switch the operation mode of the driving unit to the driving enabled mode after the setting information has been received.

10. A control method for controlling, in an electric tool system, an electric tool for use to perform operations on a work target, the electric tool system including: the electric tool; and a management system configured to communicate with the electric tool,
the operations including a first operation and a second operation to be performed after the first operation has been done,
the control method comprising:
a first operation performing step including performing the first operation;
a receiving step including receiving, after the first operation has been done, setting information about the second operation from the management system; and
an operation results transmitting step including transmitting, after the setting information has been received, operation results of the first operation to the management system.

11. A program designed to cause a computer system to perform the control method of claim 10.
